# FASCICULE DE BREVET EUROPEEN

(11) **EP 1 771 649 B1**
(45) Date de publication et mention de la délivrance du brevet: **29.04.2009**
(21) Numéro de dépôt: 05791948.2
(22) Date de dépôt: 12.07.2005
(51) Int. Cl.: F02M 25/07

(54) **DISPOSITIF ET PROCEDE DE SURALIMENTATION EN GAZ COMPRIME D'UNE TUBULURE D'ADMISSION D'UN MOTEUR TURBO-COMPRESSE**
VORRICHTUNG UND VERFAHREN ZUR AUFLADUNG EINES ANSAUGROHRES EINES TURBOAUFGELADENEN MOTORS MIT DRUCKLUFT
DEVICE AND METHOD FOR BOOSTING AN INTAKE TUBE OF A TURBOCHARGED ENGINE WITH COMPRESSED AIR

(30) Priorité: 21.07.2004 FR 0451605
(43) Date de publication de la demande: 11.04.2007
(73) Titulaire: RENAULT TRUCKS, 69800 St Priest (FR)
(72) Inventeur: PIRIOU, Christian, F-69007 LYON (FR); LEJEUNE, Marc, F-69002 LYON (FR)
(74) Mandataire: Putet, Gilles
(86) Numéro de dépôt international: PCT/FR2005/050576
(87) Numéro de publication internationale: WO 2006/018562

(56) Documents cités:
- EP-A- 1 024 272
- WO-A-00/65210
- WO-A-99/15773
- DE-A1- 4 025 565
- DE-A1- 19 717 846
- DE-A1- 19 734 801
- FR-A- 2 784 419
- FR-A- 2 831 609
- US-B1- 6 250 073

## Description

### Domaine technique

L'invention se rapporte au domaine des moteurs thermiques et plus particulièrement des moteurs turbo-compressés pouvant équiper tous types de véhicules.

Elle vise notamment un dispositif permet d'augmenter de façon instantanée la pression des gaz à l'intérieur de la conduite d'admission lorsque le moteur se trouve à bas régime et donc lorsque le turbo-compresseur n'est pas encore sollicité.

### Art antérieur

De façon générale, les dispositifs pour augmenter la pression à l'intérieur de la conduite d'admission peuvent se présenter sous diverses formes, et utiliser des moyens différents pour comprimer de l'air, le stocker dans un réservoir et l'injecter dans la conduite d'admission lorsque le moteur est à bas régime.

La compression de l'air peut notamment être réalisée par des moyens mécaniques tel un compresseur entraîné par une prise de force au niveau de la ligne de transmission du moteur. Les documents KR 9502620 et KR 9502621 décrivent des dispositifs pour améliorer la puissance d'un moteur à combustion au moyen d'un compresseur. Ce compresseur est ainsi entraîné par une prise de force au niveau de la boite de vitesses. Cependant, un tel dispositif nécessite donc une architecture moteur particulière et ne peut donc pas être rapporté sur un moteur existant. Le compresseur additionnel est en outre consommateur permanent de puissance moteur car il est entraîné par la ligne de transmission du véhicule.

On connaît également des dispositifs dans lesquels l'air est comprimé par le turbo-compresseur lui même. Tel que décrit dans le document WO 00/65 210, le surplus de gaz comprimés par le turbo-compresseur est dévié depuis la conduite d'admission à l'intérieur d'un réservoir lorsque la pression régnant à l'intérieur de cette conduite dépasse un seuil prédéterminé. Lorsqu'à un autre instant, la pression mesurée à l'intérieur de la conduite d'admission est insuffisante, on ouvre alors le réservoir qui réinjecte les gaz précédemment stockés. De cette manière, on augmente ponctuellement et instantanément la pression régnant à l'intérieur de la conduite d'admission pour augmenter la puissance du moteur. Dans ce cas, les gaz sont compressés de manière incontrôlée car il n'est pas possible de savoir à quel instant la pression dans la conduite d'admission va dépasser la pression de seuil prédéterminée à partir de laquelle les gaz sont stockés dans le réservoir. Ainsi, dans certains cas de figure le réservoir peut se vider et ne pas se remplir immédiatement. Un problème peut alors survenir lorsqu'il est nécessaire d'injecter des gaz comprimés dans la conduite d'admission. Un tel dispositif peut donc être défaillant à cause d'un réservoir vide.

Par ailleurs, les documents FR 2 831 609 et FR2 784 419 décrivent également des moyens d'accumulation de gaz frais comprimés par un piston dans au moins un des cylindres. Dans ce cas, l'entrée de gaz vers les moyens d'accumulation est raccordée aux moyens d'échappement du moteur.

Ainsi, la température des gaz est augmentée de manière significative lors de la phase de compression et peut atteindre une valeur de 600 à 700°C dans les moyens d'accumulation. La densité des gaz étant fonction inverse de leur température, leur densité est alors très faible et il est nécessaire d'utiliser des moyens d'accumulation présentant un volume très encombrant pouvant nécessiter une modification de la structure et de la forme d'un véhicule qu'ils doivent équiper. Un tel dispositif n'est donc pas adapté pour équiper les véhicules motorisés qui sont soumis à des contraintes de plus en plus fortes visant à réduire l'encombrement des accessoires ou de la motorisation.

Ainsi, le but de l'invention est de fournir un moyen sûr et efficace pour augmenter ponctuellement et instantanément la pression régnant à l'intérieur de la conduite d'admission dans les phases à bas régime en transitoire.

L'objectif de l'invention est de permettre cette augmentation de pression sans modifier la structure du moteur, ni induire de consommation d'énergie supplémentaire pour réaliser la compression des gaz, ni en augmentant le volume d'encombrement ou la structure du véhicule.

### Exposé de l'invention

L'invention concerne donc un dispositif apte à suralimenter en gaz comprimés une conduite d'admission d'un moteur turbo-compressé. De façon connue, ce dispositif est apte à stocker les gaz dans un réservoir à une pression supérieure à la pression atmosphérique, puis à les injecter dans la conduite d'admission pour augmenter la pression d'admission dans les phases à bas régime en transitoire. Par ailleurs, le dispositif comporte des moyens de connexion aptes à connecter le réservoir de stockage temporairement et alternativement soit avec le collecteur d'échappement pour récupérer des gaz lors des phases de frein moteur, soit avec la conduite d'admission lors des phases à bas régime en transitoire.

De cette manière, les moyens de connexion permettent de remplir un ou plusieurs réservoirs avec des gaz d'échappement comprimés par le moteur qui joue le rôle de compresseur, grâce au mouvement des pistons à l'intérieur du moteur pendant lesquelles aucun carburant n'est injecté. Le stockage des gaz est par conséquent réalisé lors des phases de frein moteur. De cette manière, lors d'une ré-accélération à bas régime, ces gaz comprimés peuvent être réinjectés pour augmenter instantanément la pression régnant à l'intérieur de la conduite d'admission.

Ainsi, ces gaz étant comprimés par le moteur lors des phases de frein moteur n'ont pas engendrés une consommation supplémentaire d'énergie. Les gaz qui sont comprimés par les pistons dans les cylindres ne sont pas brûlés, puisqu'il n'y a pas eu d'injection de carburant.

Conformément à l'invention, le dispositif se caractérise par le fait que les moyens de connexion comportent un échangeur thermique disposé entre le collecteur d'échappement et le réservoir.

Autrement dit, un échangeur thermique peut permettre de refroidir les gaz dont la température a augmenté du fait de leur compression à l'intérieur des cylindres du moteur où la température est de plus très élevée. En effet, la température des gaz à l'entrée de l'échangeur thermique est d'environ 700°C, en sortie celle-ci passe à une température d'environ 200°C.

L'influence des pertes de charges générées par l'échangeur sur la pression des gaz est minime puisque il est relevé une chute de pression inférieure à 200mbars entre l'entrée et la sortie de l'échangeur. Un tel échangeur permet ainsi de stocker des gaz avec une densité trois fois supérieure à celle des gaz à leur sortie des moyens d'échappement.

En pratique, les moyens de connexion peuvent comporter des tubulures pour acheminer les gaz depuis le collecteur d'échappement jusqu'au réservoir et du réservoir jusqu'à la conduite d'admission.

Autrement dit, le collecteur d'échappement, le réservoir et la conduite d'admission sont reliés par des durites adaptées pour résister à la pression.

Ainsi, dans un mode de réalisation particulier, deux durites indépendantes peuvent permettre de réaliser chacune des liaisons. Ainsi, le réservoir de stockage présente un orifice permettant de réaliser la connexion avec le collecteur d'échappement et un second orifice permettant la connexion avec la conduite d'admission.

Dans une seconde variante, le réservoir peut présenter un unique orifice qui sert à la fois au stockage et à la réinjection des gaz. Dans ce cas un raccord en T peut être utilisé pour raccorder trois portions de durites indépendantes. De cette manière, l'une des extrémités de chacune des durites est connectée au raccord, l'autre étant connecté au collecteur d'échappement, au réservoir ou à la conduite d'admission.

Avantageusement, les moyens de connexion peuvent comporter au moins une électrovanne apte à relier à la demande des portions de conduites évoquées ci avant pour réaliser alternativement le stockage des gaz dans le réservoir puis la réinjection des gaz dans la conduite d'admission.

En d'autres termes, des électrovannes peuvent permettre de fermer une durite en fonction de l'état de fonctionnement du moteur ou de la charge nécessaire. Par électrovanne, on entend également couvrir différents moyens de connexion tels que des clapets anti-retour notamment.

En pratique, les moyens de connexion peuvent comporter un échangeur thermique du type gaz/liquide dans lequel le gaz est le gaz comprimé et le liquide, un liquide tel que de l'huile ou le liquide de refroidissement du moteur.

Avantageusement, la tubulure d'entrée de l'échangeur en gaz chaud peut être dédoublée. De cette manière, on collecte des gaz comprimés au niveau de la sortie de l'échappement de deux bancs de cylindres. Ainsi, on améliore le temps de remplissage du réservoir en gaz comprimés.

En pratique, la tubulure canalisant le gaz refroidi en sortie de l'échangeur peut être unique. En d'autres termes, au niveau de la sortie de l'échangeur, il y a un orifice sur lequel une durite est connectée de façon à alimenter le réservoir de stockage en gaz refroidi.

De façon avantageuse, les moyens de connexion peuvent comporter au moins un capteur de pression pour mesurer la pression des gaz à l'intérieur de la conduite d'admission. De cette manière, on connaît à tout instant la pression régnant à l'intérieur de la conduite d'admission et lorsque celle-ci est inférieure à une pression prédéterminée de seuil, mais également en fonction de l'état de fonctionnement du moteur et de son besoin en puissance, on commande l'injection des gaz comprimés contenus à l'intérieur du réservoir.

En pratique, les moyens de connexion peuvent comporter une unité de contrôle apte à piloter les différentes électrovannes en fonction du signal transmis par le capteur de pression.

Autrement dit, une unité de contrôle électronique reçoit des informations d'un ou plusieurs capteurs de pression positionnés sur la conduite d'admission et du réservoir. Lorsqu'un besoin de puissance est nécessaire et notamment à bas régime lorsque le turbo-compresseur ne délivre pas encore suffisamment de pression à l'intérieur de la conduite d'admission, l'unité de contrôle envoie un signal aux différentes électrovannes pour les ouvrir et/ou les fermer, et relier les tubulures concernées et ainsi réinjecter des gaz contenus à l'intérieur du réservoir.

Selon un mode de réalisation particulier, ce dispositif peut être adapté à un moteur pré-existant comportant notamment un dispositif de recyclage des gaz brûlés, couramment appelé EGR pour Exhaust Gas Recycling. Ainsi, l'invention peut tirer profit des électrovannes appartenant à ce système de recyclage et déjà montées sur le moteur. Ainsi, il suffit alors de monter le réservoir sur la durite reliant le collecteur d'échappement avec la conduite d'admission au moyen d'un raccord en T après l'échangeur EGR ou la vanne EGR.

De plus, le pilotage des électrovannes peut être adapté en fonction de cette nouvelle fonction réalisée par le système de recyclage. En effet, ces deux fonctions sont réalisées à des instants différents, à savoir que le remplissage du réservoir est réalisé lors des phases de frein moteur. Le recyclage des gaz d'échappement est, quant lui, réalisé lors des phases d'accélération et stabilisées. Par conséquent, si les deux circuits sont communs, les deux fonctions qu'ils réalisent s'opèrent à des instants différents. En effet, lorsque le gaz comprimé contenu dans le réservoir doit être réinjecté, on ferme également le circuit de recyclage des gaz pour éviter de réinjecter des gaz brûlés dans cette phase d'accélération d'origine.

L'invention couvre également le procédé de suralimentation en gaz comprimés au niveau d'une tubulure d'admission d'un moteur turbo-compressé dans les phases à bas régimes en transitoire. Ce procédé comporte les étapes de stockage de gaz à l'intérieur d'un réservoir à une pression supérieure à la pression atmosphérique et d'injection desdits gaz dans la tubulure d'admission pour augmenter la pression d'admission.

Ce procédé se caractérise en ce que les gaz sont récupérés au niveau d'une tubulure d'échappement du moteur lors des phases de frein moteur, refroidis dans un échangeur thermique, acheminés jusqu'au réservoir, stockés dans le réservoir et réinjectés dans la conduite d'admission lors des phases à bas régime en transitoire.

Autrement dit, lors des phases de frein moteur, on comprime les gaz au moyen des pistons du moteur à l'intérieur des cylindres, puis on achemine ces gaz jusque dans un réservoir. Lorsqu'un besoin de puissance est nécessaire, et à bas régime, on met alors en communication le réservoir avec la conduite d'admission de façon à augmenter instantanément la pression régnant à l'intérieur de cette conduite.

### Description sommaire des figures

La manière de réaliser l'invention ainsi que les avantages qui en découlent ressortiront bien de la description du mode de réalisation qui suit, donné à titre indicatif et non limitatif, à l'appui des figures annexées dans lesquelles :
- la figure 1 est une vue schématique du dispositif dans un premier état, conformément à l'invention ;
- la figure 2 est une vue schématique du dispositif dans un second état, conformément à l'invention.

### Manière de décrire l'invention

Comme déjà évoqué, l'invention concerne un dispositif apte à suralimenter en gaz comprimés une conduite d'admission.

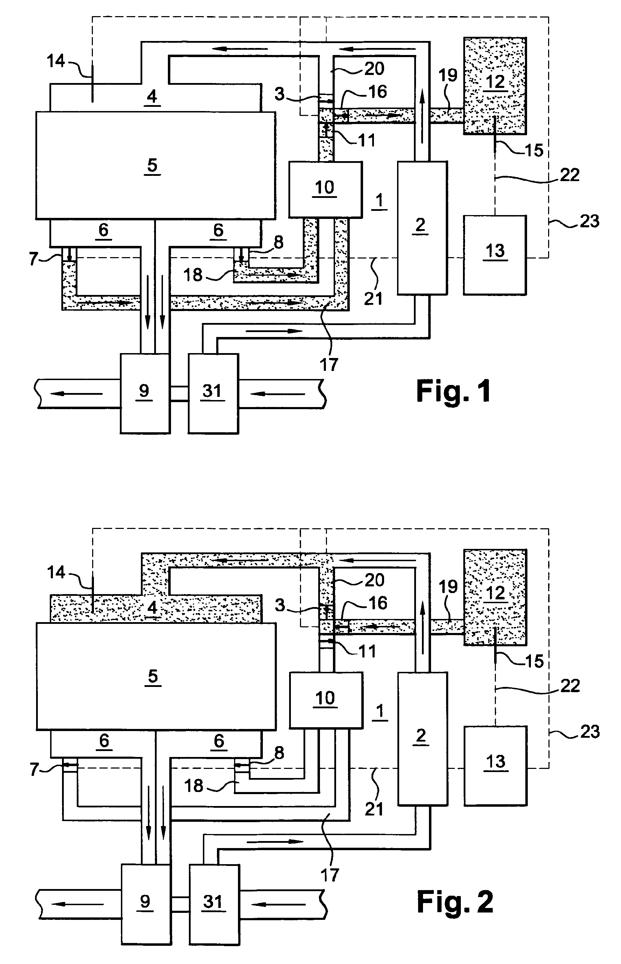

Tel que représenté à la figure 1, le dispositif (1) équipe donc un moteur à combustion (5) suralimenté au moyen d'un turbo-compresseur. Ce turbo-compresseur présente ainsi une turbine (9) entraînant un compresseur (31) qui va permettre d'augmenter la vitesse des gaz et donc leur pression à l'intérieur de la conduite d'admission.

Tel que représenté, il peut être ajouté un échangeur thermique (2) au niveau de cette conduite d'admission pour permettre de modifier la température des gaz d'admission et l'optimiser en fonction du meilleur rendement du moteur.

Cependant, à bas régime, la puissance de la turbine (9) est trop faible pour obtenir une pression des gaz à l'intérieur de la conduite d'admission (4) suffisante. Cette pression est mesurée au moyen d'un capteur de pression (14) puis un signal (23) est transmis à l'unité commande (13).

Lorsque le véhicule se trouve en phase de décélération, c'est-à-dire que le moteur est dans une phase de frein moteur, une partie des gaz frais, comprimés par les pistons, est récupérée au moyen des électrovannes (7,8) pilotées par l'unité de commande (13). Ces gaz comprimés par les pistons à l'intérieur des chambres de combustion cylindres du moteur (5) sont alors acheminés au moyen de deux tubulures (17,18) jusqu'au niveau d'un échangeur thermique (10) de façon à abaisser leur température.

Tel que représenté, l'échangeur (10) peut comporter deux circuits aptes à refroidir les gaz comprimés dans les chambres de combustion du moteur. Ce type d'échangeur peut notamment utiliser un liquide pour refroidir les gaz.

Avantageusement le liquide de refroidissement du moteur peut être utilisé puisque sa température normale de fonctionnement et d'environ 80°C.

Un tel échangeur thermique (10) permet donc d'abaisser la température des gaz d'une température de 600 à 700°C en sortie d'échappement à une température d'environ 200°C. Cet abaissement de la température permet alors d'augmenter la densité massique des gaz et ainsi permet leur stockage dans un réservoir (11) de petites dimensions.

La perte de charge générée par l'échangeur sur la pression des gaz est négligeable et s'élève à 100 à 200 mbar.

L'unité de commande (13) pilote alors les électrovannes (3, 11, 16) de façon à orienter ces gaz comprimés en direction de la tubulure (19) et permettre le remplissage du réservoir (12). Lorsque la pression maxi à l'intérieur de ce réservoir (12) est atteinte, le capteur (15) transmet alors un signal (22) à l'unité de contrôle (13) pour stopper le remplissage du réservoir (12). L'électrovanne (16) est donc fermée jusqu'à ce qu'une chute de pression à l'intérieur de la conduite d'admission (4) soit détectée par le capteur de pression (14), et ce lors d'une phase à bas régime.

Ainsi, tel que représenté à la figure 2, lorsque le véhicule se trouve à bas régime et qu'un apport de puissance est nécessaire de façon instantanée, l'unité de contrôle (13) pilote alors les électrovannes (3, 11, 16) de manière à orienter les gaz comprimés à l'intérieur d'une tubulure (20) connectée avec la conduite d'admission (4).

Ainsi, la pression à l'intérieur de la conduite d'admission (4) augmente rapidement, ce qui génère un apport de puissance instantané afin de pallier au temps de réponse du turbocompresseur. Lorsque la pression assurée par le capteur (14) atteint un seuil prédéterminé, l'unité de contrôle (13) pilote alors de nouveau les électrovannes (3, 11, 16) de façon à couper l'injection des gaz comprimés depuis le réservoir (12), le cycle décrit à la figure 1 pouvant être répété à nouveau.

Tel que représenté, ce dispositif a été rapporté sur un moteur pré-équipé d'un système de recyclage des gaz d'échappement. Par conséquent, il ne constitue pas dans ce mode de réalisation une solution complexe à mettre en oeuvre, est relativement peu onéreux en termes de pièces supplémentaires.

Il ressort de ce qui précède que le dispositif conforme à l'invention présente de multiples avantages, notamment :
- il permet de fournir une solution à adaptable sur des moteurs existants pour optimiser le temps de réponse d'un turbo-compresseur ;
- il ne consomme pas de puissance supplémentaire ;
- il est peu onéreux.

## Revendications

1. Dispositif (1) apte à suralimenter en gaz comprimés une conduite d'admission (4) d'un moteur (5) turbo-compressé, ledit dispositif (1) étant apte à stocker les gaz dans un réservoir (12) à une pression supérieure à la pression atmosphérique puis à injecter lesdits gaz dans la conduite d'admission (4) pour augmenter la pression d'admission dans les phases à bas régime en transitoire, ledit dispositif comportant des moyens de connexion aptes à connecter le réservoir (12) de stockage temporairement et alternativement soit avec le collecteur d'échappement (6) pour récupérer des gaz lors des phases de frein moteur, soit avec la conduite d'admission (4) lors des phases à bas régime en transitoire, **caractérisé en ce que** les moyens de connexion comportent un échangeur thermique (10) disposé entre le collecteur d'échappement (6) et le réservoir (12).

2. Dispositif selon la revendication 1, **caractérisé en ce que** les moyens de connexion comportent des tubulures (17-20) pour acheminer les gaz depuis le collecteur d'échappement (6) jusqu'au réservoir (12), et du réservoir (12) jusqu'à la conduite d'admission (4).

3. Dispositif selon la revendication 2, **caractérisé en ce que** les moyens de connexion comportent au moins une électrovanne (3, 7, 8, 11, 16) apte à ouvrir et fermer des portions de tubulures (17-20) pour réaliser alternativement le stockage des gaz dans le réservoir (12) puis la réinjection des gaz dans la conduite d'admission (4).

4. Dispositif selon la revendication 1, **caractérisé en ce que** l'échangeur thermique (10) est du type gaz/liquide.

5. Dispositif selon la revendication 1, **caractérisé en ce que** la tubulure (7, 8) approvisionnant l'échangeur (10) en gaz chaud est dédoublée.

6. Dispositif selon la revendication 1, **caractérisé en ce que** la tubulure (20) canalisant le gaz refroidi en sortie de l'échangeur (10) est unique.

7. Dispositif selon la revendication 1, **caractérisé en ce que** les moyens de connexion comportent au moins un capteur de pression (14) pour mesurer la pression des gaz à l'intérieur de la conduite d'admission (4).

8. Dispositif selon les revendications 3 et 7, **caractérisé en ce que** les moyens comportent une unité de contrôle (13) apte à piloter les différentes électrovannes (3, 7, 8, 11, 16) en fonction du signal transmis par le capteur de pression (14).

9. Dispositif selon les revendications 2 et 3, **caractérisé en ce que** les moyens comportent des tubulures (17-20) et des électrovannes (3, 7, 8, 11, 16) appartenant à un système de recyclage des gaz brûlés pré-équipant le moteur (5).

10. Procédé de suralimentation en gaz comprimés au niveau d'une tubulure d'admission (4) d'un moteur (5) turbo-compressé dans les phases à bas régimes en transitoire, ledit procédé comportant les étapes de stockage de gaz à l'intérieur d'un réservoir (12) à une pression supérieure à la pression atmosphérique et d'injection desdits gaz dans la tubulure d'admission (4) pour augmenter la pression d'admission **caractérisé en ce que** les gaz comprimés sont récupérés au niveau d'une tubulure d'échappement (6) du moteur (5) lors des phases de frein moteur, refroidis dans un échangeur thermique (10), acheminés jusqu'au réservoir (12), stockés dans le réservoir (12) et réinjectés dans la conduite d'admission (4) lors des phases à bas régime en transitoire.

## Claims

1. Device (1) designed to supercharge an inlet manifold (4) of a turbocharged engine (5) with compressed gases, the said device (1) being designed to store the gases in a reservoir (12) at a pressure above atmospheric pressure and then to inject the said gases into the inlet manifold (4) in order to increase the inlet pressure in low-speed transient phases, the said device comprising connection means designed to connect the storage reservoir (12) temporarily and alternately either to the exhaust manifold (6) in order to recover gases during engine braking phases or to the inlet manifold (4) during low-speed transient phases, **characterized in that** the connection means comprise a heat exchanger (10) arranged between the exhaust manifold (6) and the reservoir (12).

2. Device according to Claim 1, **characterized in that** the connection means comprise pipes (17-20) for conveying the gases from the exhaust manifold (6) to the reservoir (12), and from the reservoir (12) to the inlet manifold (4).

3. Device according to Claim 2, **characterized in that** the connection means comprise at least one solenoid valve (3, 7, 8, 11, 16) designed to open and close portions of pipes (17-20) in order alternately to store the gases in the reservoir (12) and then re-inject the gases into the inlet manifold (4).

4. Device according to Claim 1, **characterized in that** the heat exchanger (10) is of the gas/liquid type.

5. Device according to Claim 1, **characterized in that** the pipe (7, 8) supplying the exchanger (10) with hot gas is split in two.

6. Device according to Claim 1, **characterized in that** the pipe (20) channelling the cooled gas leaving the exchanger (10) is single.

7. Device according to Claim 1, **characterized in that** the connection means comprise at least one pressure sensor (14) for measuring the pressure of the gases inside the inlet manifold (4).

8. Device according to Claims 3 and 7, **characterized in that** the means comprise a control unit (13) designed to control the various solenoid valves (3, 7, 8, 11, 16) as a function of the signal transmitted by the pressure sensor (14).

9. Device according to Claims 2 and 3, **characterized in that** the means comprise pipes (17-20) and solenoid valves (3, 7, 8, 11, 16) belonging to a burnt-gas recycling system pre-equipping the engine (5).

10. Method of supercharging compressed gases to an inlet manifold (4) of a turbocharged engine (5) in low-speed transient phases, the said method comprising the steps of storing gases inside a reservoir (12) at a pressure above atmospheric pressure and injecting the said gases into the inlet manifold (4) in order to increase the inlet pressure, **characterized in that** the compressed gases are recovered at an exhaust pipe (6) of the engine (5) during engine braking phases, cooled in a heat exchanger (10), conveyed to the reservoir (12), stored in the reservoir (12) and re-injected into the inlet manifold (4) during low-speed transient phases.

## Patentansprüche

1. Vorrichtung (1), die geeignet ist, eine Ansaugleitung (4) eines Turbokompressor-Motors (5) mit Druckgasen aufzuladen, wobei die Vorrichtung (1) geeignet ist, die Gase in einem Behälter (12) mit einem Druck zu speichern. der höher ist als der Atmosphärendruck, und die Gase dann in die Ansaugleitung (4) einzuführen, um den Ansaugdruck in den Übergangsphasen mit niedriger Drehzahl zu erhöhen, wobei die Vorrichtung Verbindungseinrichtungen umfasst, die geeignet sind, den Speicherbehälter (12) temporär und alternativ entweder während Phasen mit Motorbremse mit dem Auspuffsammler (6) zur Wiedergewinnung der Gase oder während Übergangsphasen mit niedriger Drehzahl mit der Ansaugleitung (4) zu verbinden, **dadurch gekennzeichnet, dass** die Verbindungseinrichtungen einen Wärmetauscher (10) umfassen, der zwischen dem Auspuffsammler (6) und dem Behälter (12) angeordnet ist.

2. Vorrichtung nach Anspruch 1, **dadurch gekennzeichnet, dass** die Verbindungseinrichtungen Rohrleitungen (17 bis 20) aufweisen, um die Gase vom Auspuffsammler (6) zum Behälter (12) und vom Behälter (12) zur Ansaugleitung (4) zu befördern.

3. Vorrichtung nach Anspruch 2, **dadurch gekennzeichnet, dass** die Verbindungseinrichtungen wenigstens ein Magnetventil (3, 7, 8, 11, 16) aufweisen, das geeignet ist, Abschnitte der Rohrleitungen (17 bis 20) zu öffnen und zu schließen, um alternativ das Speichern der Gase in dem Behälter (12) und dann die Wiedereinspritzung der Gase in die Ansaugleitung (4) durchzuführen.

4. Vorrichtung nach Anspruch 1, **dadurch gekennzeichnet, dass** der Wärmetauscher (10) ein Gas/Flüssigkeits-Wärmetauscher ist.

5. Vorrichtung nach Anspruch 1, **dadurch gekennzeichnet, dass** die Rohrleitung (7, 8), die den Tauscher (10) mit heißem Gas versorgt, zweigeteilt ist.

6. Vorrichtung nach Anspruch 1, **dadurch gekennzeichnet, dass** die Rohrleitung (20), die das abgekühlte Gas am Ausgang des Wärmetauschers (10) kanalisiert, einteilig ist.

7. Vorrichtung nach Anspruch 1, **dadurch gekennzeichnet, dass** die Verbindungseinrichtungen wenigstens einen Drucksensor (14) zum Messen des Gasdrucks innerhalb der Ansaugleitung (4) aufweisen.

8. Vorrichtung nach den Ansprüchen 3 und 7, **dadurch gekennzeichnet, dass** die Einrichtungen eine Steuerungseinheit (13) aufweisen, die geeignet ist, die verschiedenen Magnetventile (3, 7, 8, 11, 16) abhängig von dem durch den Drucksensor (14) übertragenen Signal zu steuern.

9. Vorrichtung nach den Ansprüchen 2 und 3, **dadurch gekennzeichnet, dass** die Einrichtungen Rohrleitungen (17 bis 20) und Magnetventile (3, 7, 8, 11, 16) aufweisen, die zu einem System zur Wiedergewinnung von Auspuffgasen gehören, mit dem der Motor (5) vorausgestattet ist.

10. Verfahren zur Aufladung eines Turbokompressor-Motors (5) mit Druckgasen im Bereich einer Ansaugrohrleitung (4) in den Übergangsphasen mit niedriger Drehzahl, wobei das Verfahren die Schritte aufweist, das Gas im Inneren eines Behälters (12) mit einem Druck zu speichern, der höher ist als der Atmosphärendruck, und die Gase in die Ansaugrohrleitung (4) einzuführen, um den Ansaugdruck zu erhöhen, **dadurch gekennzeichnet, dass** die Druckgase im Bereich der Auslassrohrleitung (6) des Motors (5) in Phasen mit Motorbremse wiedergewonnen, in einem Wärmetauscher (10) abgekühlt, zu dem Behälter (12) befördert, in dem Behälter (12) gespeichert und während Übergangsphasen mit niedriger Drehzahl in die Ansaugleitung (4) wiedereingeführt werden.
